# EUROPÄISCHE PATENTSCHRIFT

(11) **EP 0 434 781 B1**
(45) Veröffentlichungstag und Bekanntmachung des Hinweises auf die Patenterteilung: **21.07.1993**
(21) Anmeldenummer: 90907029.4
(22) Anmeldetag: 16.05.1990
(51) Int. Cl.: A01G 3/06

(54) **ELEKTROMOTORISCH ANGETRIEBENE HANDGRASSCHERE**
ELECTRICALLY POWERED HAND-HELD SHEARS FOR LAWNS
CISEAUX MANUELS A PELOUSE COMMANDES PAR MOTEUR ELECTRIQUE

(30) Priorität: 18.05.1989 DE 3916145
(43) Veröffentlichungstag der Anmeldung: 03.07.1991
(73) Patentinhaber: WOLF-Geräte GmbH Vertriebsgesellschaft KG, D-57518 Betzdorf (DE)
(72) Erfinder: WEID, Helmut, D-5243 Niederdreisbach (DE); HELD, Peter, D-5241 Scheuerfeld (DE); GEBHARD, Orthey, D-5241 Nauroth (DE)
(74) Vertreter: Feldkamp, Rainer, Dipl.-Ing.
(86) Internationale Anmeldenummer: EP9000791
(87) Internationale Veröffentlichungsnummer: WO9013997

(56) Entgegenhaltungen:
- DE-A- 2 438 360
- DE-B- 1 212 342
- FR-A- 2 190 347

## Beschreibung

Die Erfindung betrifft eine elektromotorisch angetriebene Handgrasschere mit einem Gehäuse, das Schneidmesser, einen Antriebsmotor mit Getriebe und Batterien lagert und einen Handgriff bildet, der Betätigungsschaltglieder in Griffnähe aufweist.

Derartige Grasscheren, wie sie beispielsweise in der DE-B 23 19 219 beschrieben sind, haben eine weite Verbreitung gefunden, und sie werden vornehmlich benutzt zum Schneiden von Basen an Kanten oder anderen Stellen, die dem Rasenmäher nicht oder nicht ohne weiteres zugänglich sind. Der Kraftantrieb solcher Scheren erleichtert die Bedienung erheblich, und er gewährleistet ein ermüdungsfreies Arbeiten selbst über längere Zeiträume. Schwierigkeiten ergaben sich manchmal jedoch in der Handhabung, wenn überhängende Pflanzenteile oder dergleichen eine Schrägstellung oder eine Senkrechtstellung der Schneidblätter erforderten, weil dann die Hand entsprechend mitverdreht werden muß, denn die Bedienungselemente, d. h. der Einschaltknopf muß weiter gedrückt bleiben, damit die Schere nicht stehenbleibt, so daß der Handgriff nicht ohne weiteres schräg oder von unten erfaßt werden kann. Versuche, den Handgriff in einer für den Schnitt günstigeren Lage zu erfassen, erhöhen die Verletzungsgefahr.

Bei handgetriebenen Handgrasscheren, wie sie beispielsweise in der DE-B 12 12 342 oder der DE-C 35 31 881 beschrieben sind, war es möglich, den Handgriff gegenüber den Schneidmessern über ein Drehgelenk zu verstellen, so daß immer eine griffgünstige Relativstellung gewählt werden konnte. Hierbei war die vom Handgriff betätigte Zugstange, die auf das Scherenblatt einwirkte, durch das Drehgelenk hindurchgeführt. Bei elektromotorisch angetriebenen Handgrasscheren, bei denen ein Schutzgehäuse Messer und Messerantrieb weitgehend abdeckt, ist eine derartige Drehgelenkanordnung nicht ohne weiteres möglich. Zwar konnte die Schneidebene einer solchen motorisch angetriebenen Handgrasschere dann eingestellt werden, wenn diese an einem Träger, insbesondere an einem Rollstock befestigt war. Bei einer derartigen Handgrasschere, wie sie beispielsweise in der DE-A 24 38 360 beschrieben ist, war das Ende des Rollstockes horizontal abgebogen und in eine Führungsbuchse des Scherengehäuses in unterschiedlichen Drehstellungen einsetzbar. In diesem Falle wurde demgemäß die Handgrasschere als Ganzes gegenüber dem Rollstab verschwenkt, der an seinem Griffstück mit den Bedienungselementen ausgestattet war.

Der Erfindung liegt daher die Aufgabe zugrunde, eine elektromotorisch angetriebene Handgrasschere so auszubilden, daß die Schneidebene der Messer auch ohne zusätzlichen Träger relativ zu der die Schere führenden in Normalstellung befindlichen Hand für alle Anwendungsfälle in der bequemsten Schneidstellung einstellbar ist.

Gelöst wird die gestellte Aufgabe durch die im Kennzeichnungsteil des Patentanspruchs 1 angegebenen Merkmale. Durch die Unterteilung des Gehäuses in Schneidkopf und Handgriff wird ohne Aufgabe der Gehäuseschutzfunktion eine Einstellung der Messerebene möglich, ohne daß der Handgriff mit dem erfaßten und dauernd zu haltenden Schalter ungünstig verdreht werden müßte oder die Hand einer Verletzungsgefahr ausgesetzt würde.

Es könnte daran gedacht werden, den Antriebsmotor im Handgriffgehäuse unterzubringen und seine Antriebswelle durch ein Drehgelenk hindurch auf das im Schneidkopf angeordnete Getriebe zu übertragen. Eine solche Anordnung soll zwar für die Erfindung vorbehalten bleiben, jedoch sieht diese vorzugsweise eine Anordnung vor, bei der der Schneidkopf den Motor zusammen mit dem Getriebe aufnimmt, während die Batterien und der Schalter im Handgriff untergebracht sind und die Stromübertragung über das Drehgelenk hinweg erfolgt.

Der Schneidkopf nimmt einen relativ kleinen Baum ein und kann mit den Scherenblättern leicht auch an unzugänglichen Stellen eingesetzt werden. Dies gilt vor allem dann, wenn gemäß einer bevorzugten Ausführung der Erfindung eine Mehrfach-Gelenkanordnung zwischen Handgriff und Schneidkopf vorgesehen ist, durch welche der Schneidkopf relativ weit gegenüber dem Handgriff seitlich in jede beliebige Winkelstellung versetzt werden kann.

Weitere Ausgestaltungen der Erfindung ergeben sich aus den Unteransprüchen.

Nachstehend werden Ausführungsbeispiele der Erfindung anhand der Zeichnung beschrieben. In der Zeichnung zeigen:
- Fig. 1: einen Längsschnitt einer erfindungsgemäßen Handgrasschere in Einfachhebelausführung,
- Fig. 2A-2C: schematische Querschnittsansichten der Handgrasschere gemäß Fig. 1 in der Grundstellung nach einem ersten Verstellschritt und nach einem zweiten Verstellschritt,
- Fig. 3: einen Längsschnitt einer erfindungsgemäßen Handgrasschere mit Doppelhebelfunktion,
- Fig. 4A-4D: schematische Querschnittsdarstellungen der Handgrasschere gemäß Fig. 3 in der Grundstellung bzw. nach dem ersten, zweiten und dritten Verstellschritt,

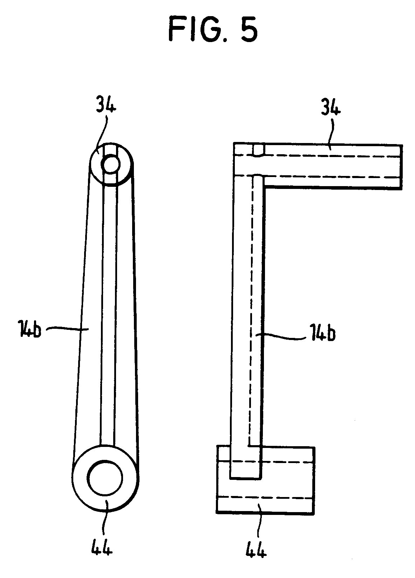

- Fig. 5: eine Vorder- und Seltenansicht des beim Ausführungsbeispiel nach Fig. 3 innerhalb des Handgriffs schwenkbaren Zwischenstücks.

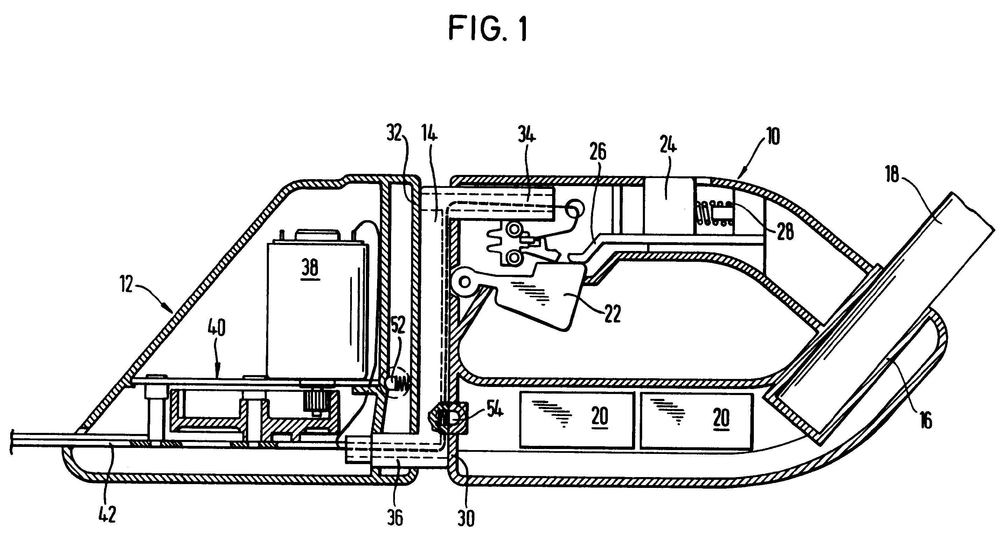

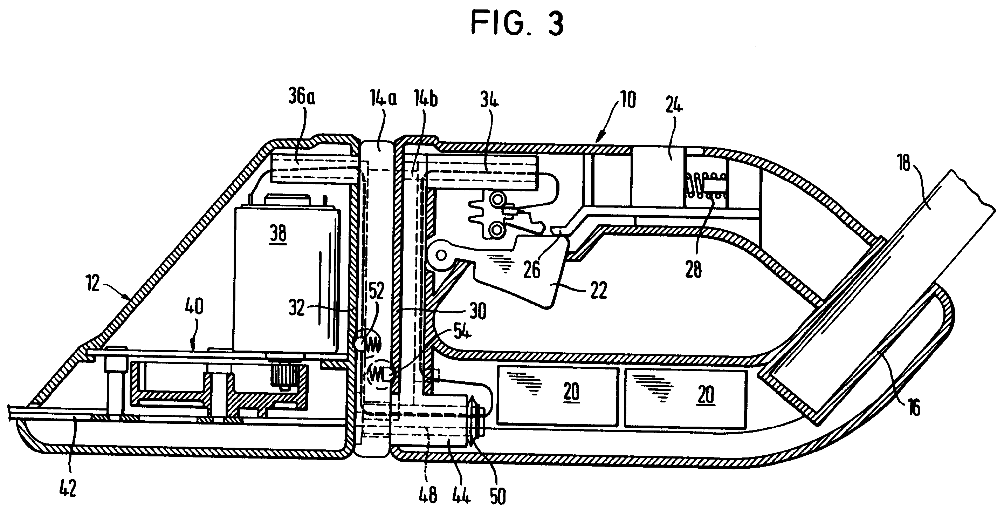

Bei den beiden in der Zeichnung dargestellten Ausführungsbeispielen besteht die Handgrasschere aus einem Handgriff (10) und einem Schneidkopf (12), der über ein Zwischenstück (14) mit dem Handgriff schwenkbar verbunden ist. Der Handgriff (10) weist eine Stieltülle (16) zum wahlweisen Einsetzen eines Führungsstieles (18) auf. Die zweckmäßigerweise wieder aufladbaren Batterien (20) befinden sich in einem Hohlkörper im unteren Teil des Handgriffs. Im oberen Teil des Handgriffs ist bedienungsgünstig ein mit dem Zeigefinger zu bedienender Schaltknopf (22) gelagert, der durch den Sperrarm (26) einer Schiebesicherung (24) in Ausschaltstellung (Fig. 1 und 3) gehalten ist. Er wird durch eine auf die Schiebesicherung (24) wirkende Druckschraubenfeder (28) in die Sperrstellung gedrückt. Die durch einen Schlitz der oberen Gehäusewand zugängliche Schiebesicherung (24) kann mit dem Daumen der den Griff erfassenden Hand zurückgeschoben werden, um den Schaltknopf (22) freizugeben.

Das Zwischenstück könnte auch .innerhalb des Handgriffgehäuses untergebracht sein, wie das ähnlich Teil (14b). Die Sicherung kann nur mit der zweiten Hand bedient werden, was eine erhöhte Sicherheit ergibt.

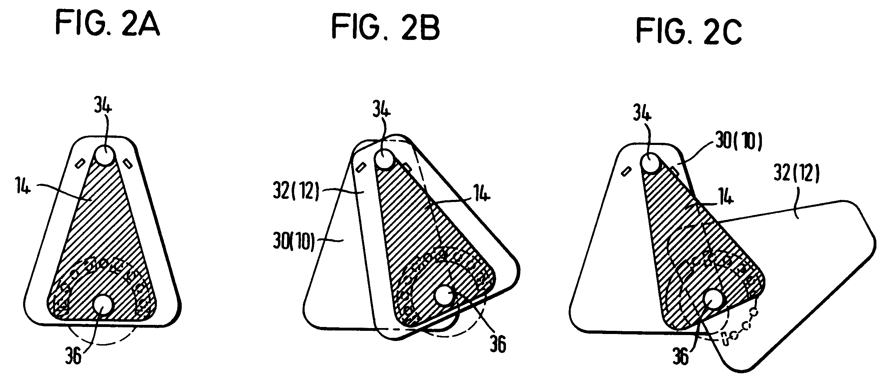

Die Vorderwand (30) des allgemein trapezförmig gestalteten Handgriffs weist im Oberteil ein Loch bzw. eine Führungsbuchse auf, in die ein Drehgelenkzapfen (34) schwenkbar einsteht, der an das Zwischenstück (14) angeformt ist und von diesem nach hinten vorsteht. Das Zwischenstück (14) hat, wie aus Fig. 2A-2C ersichtlich, eine der Gehäuseform ähnliche Dreiecksgestalt. Das Zwischenstück (14) weist außerdem im unteren Teil im Mittelabschnitt einen nach vorn vorstehenden Drehgelenkzapfen (36) auf, der in ein am unteren Teil der Rückwand (32) des Schneidkopfes (12) angeordnetes Loch bzw. eine Führungsbuchse einsteht, wodurch der Schneidkopf um die Achse des Drehgelenkzapfens (36) verdrehbar ist.

Der Schneidkopf (12) weist einen Elektromotor (38) auf, der über ein Getriebe (40) mit Kurbelantrieb das bewegliche Schneidmesser (42) antreibt, welches gegenüber einem feststehenden Messer hin- und hergehend beweglich ist.

Die Stromzuführung zwischen Batterien (20) und Motor (38) erfolgt über die vom Schaltknopf (22) betätigten Kontakte und Stromzuführungsleitungen, die zweckmäßigerweise durch den Drehgelenkzapfen (34), das als Hohlkörper ausgebildete Zwischenstück (14) und den Drehgelenkzapfen (36) geführt sind (nicht dargestellt).

Über die dargestellte Drehgelenkanordnung zwischen Handgriff (10) und Schneidkopf (12) kann die Schneidebene der Messer relativ zu dem Handgriff in die ergonometrisch günstigste Stellung eingestellt werden. Die Figuren 2B und 2C veranschaulichen lediglich zwei der möglichen Schwenkstellungen. In Fig. 2B ist das Zwischenstück (24) mitsamt dem Schneidkopf (12) um die Achse des Drehgelenkzapfens (34) bis in eine durch einen nicht dargestellten Anschlag begrenzte Schwenkstellung ausgefahren. In der schematischen Darstellung nach Fig. 2C ist zusätzlich der Schneidkopf (12) um die Achse des Drehgelenkzapfens (36) so weit verschwenkt, daß die Schneidmesserebene (bei gerade gehaltenem Griff) vertikal steht. Es ist ersichtlich, daß zahlreiche Zwischenstellungen eingestellt werden können und eine Verdrehung des Schneidkopfes bzw. des Zwischenstücks auch nach der anderen Seite erfolgen kann.

In Fig. 3 sind die den Teilen nach Fig. 1 entsprechenden Teile mit gleichen Bezugszeichen versehen und im folgenden nicht nochmals erläutert. Das Ausführungsbeispiel gemäß Fig. 3 unterscheidet sich von dem Ausführungsbeispiel nach Fig. 1 durch die Drehgelenkanordnung, die gegenüber der Ausführung nach Fig. 1 noch weitere Einstellungen ermöglicht. Hierbei ist das Zwischenstück in zwei Teile (14a und 14b) unterteilt. Der Teil (14b) befindet sich innerhalb des Handgriffgehäuses hinter der Vorderwand (30). Er trägt im oberen feil den Drehgelenkzapfen (34), der innerhalb des Handgriffgehäuses schwenkbar ist. Der als hebelarm ausgeführte Teil (14b) ist hinter der Vorderwand (30) begrenzt verschwenkbar. Er könnte auch unverkleidet ausgeführt sein.

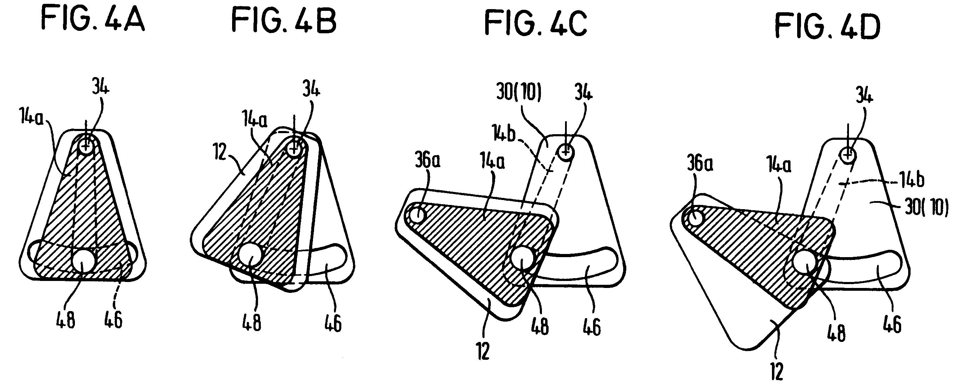

Er trägt an seinem unteren Ende eine Führungsbuchse (44), die in einem Kreisbogenschlitz (46) der Vorderwand (30) bzw. einer hierzu im Abstand liegenden Wand (30) verschwenkbar ist. Der Kreisbogenschlitz (46) verläuft konzentrisch zur Drehachse des Drehgelenkzapfens (34). In der Drehgelenkbuchse (44) ist ein Drehgelenkzapfen (48) drehbar gelagert und durch eine Federscheibe (50) gesichert, wie aus den Figuren 4A-4D ersichtlich ist. Dieser Drehgelenkzapfen (48) ist im unteren Abschnitt des Teiles (14a) des Zwischenstücks angeordnet. Der Drehgelenkzapfen (36a) ist in diesem Fall im oberen Teil des Zwischenstücks (14a) angeordnet und drehbar in einem Lager im oberen Teil des Schneidkopfes über dem Motor (38) drehbar geführt.

Bei dieser Ausführungsform kann der Schneidkopf, wie aus den Fig. 4A-4D ersichtlich, mit relativ hierzu festgelegten Zwischenstückteilen (14a, 14b) um die Achse des Drehzapfens (34) nach beiden Seiten verschwenkt werden, wobei die Führungsbuchse (44) in dem Kreisbogenschlitz (46) läuft. Statt dessen oder zusätzlich kann der Schneidkopf mit relativ hierzu festgelegtem Zwischenstücktell (14a) um die Achse des Drehgelenkzapfens (48) verschwenkt werden. Außerdem kann der Schneidkopf relativ zu dem Zwischenstück (14a) um die Achse des Drehgelenkzapfens (36a) verschwenkt werden. Geeignete, in der Zeichnung nicht dargestellte Anschläge verhindern dabei, daß die einzelnen Teile der Schere weiter auseinandergedreht werden, als die Stabilität der Gelenkanordnungen dies möglich macht. Nicht dargestellte Klemm- und Führungseinrichtungen, die zwischen Schneidkopf und Zwischenstück bzw. zwischen letzterem und dem Handgriff angeordnet sind, gewährleisten eine günstige Verstellung und eine sichere und stabile Verbindung in jeder denkbaren Drehstellung. Es kann eine stufenweise Verstellung vorgenommen werden, wobei die einzelnen Stellungen reibungsschlüssig festgelegt sind. Statt dessen können jedoch auch federnde Schwenk- und Drehrasten (52, 54) in definierten Relativstellungen eingreifen, die spezielle Stellungen definieren.

## Patentansprüche

1. Elektromotorisch angetriebene Handgrasschere mit einem Gehäuse, das Schneidmesser (42), einen Antriebsmotor (38) mit Getriebe (40) und Batterien (20) lagert und einen Handgriff (10) bildet, der Betätigungsschaltglieder in Griffnähe aufweist, **dadurch gekennzeichnet**, daß das Scherengehäuse in den Handgriff (10) und einen relativ hierzu um wenigstens eine in Längsrichtung der Schere verlaufende Achse (34, 36, 36a, 48) verschwenkbaren Schneidkopf (12) unterteilt ist.

2. Handgrasschere nach Anspruch 1, **dadurch gekennzeichnet,** daß der Schneidkopf (12) den Elektroantriebsmotor (38) und das die Antriebsverbidung nach den Schneidmessern (42) herstellende Getriebe (40) beherbergt und im Handgriffgehäuse (10) die Batterien (20) untergebracht sind.

3. Handgrasschere nach Anspruch 2, **dadurch gekennzeichnet**, daß die elektrische Verbindung zwischen den Batterien (20) bzw. den vom Schaltknopf (22) betätigten Hontakten und dem Elektromotor (38) über Leitungsverbindungen im Drehgelenk erfolgt.

4. Handgrasschere nach einem der Ansprüche 1 bis 3, **dadurch gekennzeichnet,** daß Handgriff (10) und Schneidkopf (12) über ein Zwischenstück (14) getrennt sind, das einerseits über einen Drehgelenkzapfen (34) mit dem Handgriff und andererseits mit einem Drehgelenkzapfen (36) am Schneidkopf (12) angelenkt ist.

5. Handgrasschere nach Anspruch 4, **dadurch gekennzeichnet**, daß das Zwischenstück (14) kurbelartig ausgebildet ist und an seinem oberen Ende einen nach hinten weisenden Drehgelenkzapfen (34) aufweist, der in ein Lager im oberen Teil des Handgriffs (10) einsteht, während ein unterer, sich nach vorn erstreckender Drehgelenkzapfen (36) des Zwischenstücks (14) in ein unteres Lager des Schneidkopfes (12) einsteht.

6. Handgrasschere nach den Ansprüchen 4 und 5, **dadurch gekennzeichnet**, daß die Querschnittsform der Schere trapezförmig ausgestaltet ist und das Zwischenstück (14) eine entsprechende trapezförmige Gestalt aufweist.

7. Handgrasschere nach den Ansprüchen 4 bis 6, **dadurch gekennzeichnet**, daß die Drehgelenkzapfen (34, 36) in ihren Gehäuselagern axial abgestützt sind und die Gehäuseteile in Längsrichtung gegeneinander vorspannen.

8. Handgrasschere nach Anspruch 4, **dadurch gekennzeichnet**, daß das Zwischenstück in zwei Abschnitte (14a, 14b) unterteilt ist, die über einen Drehgelenkzapfen (48) schwenkbar miteinander verbunden sind.

9. Handgrasschere nach Anspruch 8, **dadurch gekennzeichnet**, daß der eine Teil (14b) des Zwischenstücks innerhalb des Handgriffgehäuses um die Achse seines Anlenkzapfens (34) schwenkbar ist, wobei die Handgriff-Gehäuserückwand (30) einen zur Drehachse (34) konzentrischen Kreisbogenschlitz (46) für den Drehgelenkzapfen (48) aufweist.

10. Handgrasschere nach Anspruch 9, **dadurch gekennzeichnet**, daß der Drehgelenkzapfen (48) im unteren Teil des anderen Abschnitts (14a) des Zwischenstücks festgelegt und in einer Führungsbuchse (44) gelagert ist, die im unteren Teil des Abschnitts (14b) des Zwischenstücks festgelegt und im Schlitz (46) geführt ist.

11. Handgrasschere nach den Ansprüchen 8 bis 10, **dadurch gekennzeichnet**, daß das obere Ende des vorderen Abschnitts (14a) des Zwischenstücks mit einem Drehgelenkzapfen (36a) in dem oberen Teil des Schneidkopfes (12) drehbeweglich geführt ist.

12. Handgrasschere nach einem der Ansprüche 1 bis 11, **dadurch gekennzeichnet**, daß Drehbegrenzungsanschläge vorgesehen sind, um die relative Schwenkbewegung um wenigstens eine der Achsen der Drehgelenkzapfen (34, 36, 36a, 48) zu begrenzen.

13. Handgrasschere nach einem der Ansprüche 1 bis 12, **dadurch gekennzeichnet**, daß federnd angreifende Rasten verschiedene Relativschwenkstellungen zwischen den gegeneiander verschwenkbaren Bauteilen begrenzen.

## Claims

1. Electric motor-driven, hand-operated grass trimmer, having a housing which contains cutting blades (42), a drive motor (38) with gears (40), and batteries (20), and which forms a handle (10) which incorporates control switch elements within easy reach,
characterised in that the trimmer housing is divided into the handle (10) and a cutting head (12) which swivels relative to it about at least one axis (34, 36, 36a, 48) running in the longitudinal direction of the trimmer.

2. Hand-operated grass trimmer according to claim 1, characterised in that the cutting head (12) houses the electric drive motor (38) and the gears (40), which establish the driving connection to the cutting blades (42), and the batteries (20) are accommodated in the handle's housing (10).

3. Hand-operated grass trimmer according to claim 2, characterised in that the electrical connection between the batteries (20), or the contacts activated by the control button (22), and the electric motor (38) is made by cable connections in the swivel joint.

4. Hand-operated grass trimmer according to one of claims 1 to 3, characterised in that the handle (10) and cutting head (12) are separated by a connector (14) which is hinged, on the one hand, to the handle via a pivot pin (34) and, on the other hand, to the cutting head (12) by a pivot pin (36).

5. Hand-operated grass trimmer according to claim 4, characterised in that the connector (14) is a crank-type connector and at its upper end has a pivot pin (34) which points backwards and which projects into a bearing in the upper part of the handle (10), whereas a lower, forward-extending pivot pin (36) of the connector (14) projects into a lower bearing in the cutting head (12).

6. Hand-operated grass trimmer according to claims 4 and 5, characterised in that the cross-section of the trimmer is trapezoidal and the connector (14) has a corresponding trapezoidal shape.

7. Hand-operated grass trimmer according to claims 4 to 6, characterised in that the pivot pins (34, 36) are axially supported in their housing bearings and pretension the parts of the housing against one another in the longitudinal direction.

8. Hand-operated grass trimmer according to claim 4, characterised in that the connector is divided into two sections (14a, 14b) which are connected to each other by a pivot pin (48) and can be swivelled.

9. Hand-operated grass trimmer according to claim 8, characterised in that the one part (14b) of the connector inside the handle's housing can be swivelled about the axis of its hinge pin (34), the rear wall (30) of the handle's housing having an arc-shaped slot (46), concentric to the axis of rotation (34), for the pivot pin (48).

10. Hand-operated grass trimmer according to claim 9, characterised in that the pivot pin (48) is fixed in the lower part of the other section (14a) of the connector and housed in a guide bushing (44) fixed in the lower part of the section (14b) of the connector and set in the slot (46).

11. Hand-operated grass trimmer according to claims 8 to 10, characterised in that the upper end of the front section (14a) of the connector can be moved by rotation by a pivot pin (36a) in the upper part of the cutting head (12).

12. Hand-operated grass trimmer according to one of claims 1 to 11, characterised in that stops to limit rotation are provided in order to limit the relative swivel movement about at least one of the axes of the pivot pins (34, 36, 36a, 48).

13. Hand-operated grass trimmer according to one of claims 1 to 12, characterised in that spring-action stops limit various relative swivel positions between the components that are able to swivel against each other.

## Revendications

1. Cisaille manuelle à gazon, entraînée par moteur électrique et munie d'un boîtier qui loge des lames de coupe (42), un moteur d'entraînement (38) associé à une transmission (40) et des piles (20), et forme une poignée (10) à proximité de laquelle se trouvent des organes d'enclenchement de l'actionnement, caractérisée par le fait que le boîtier de la cisaille est subdivisé en la poignée (10) et en une tête de coupe (12) pouvant pivoter, par rapport à cette dernière, autour d'au moins un axe (34, 36, 36a, 48) s'étendant dans le sens longitudinal de ladite cisaille.

2. Cisaille manuelle à gazon, selon la revendication 1, caractérisée par le fait que la tête de coupe (12) renferme le moteur électrique d'entraînement (38) et la transmission (40) établissant la liaison d'entraînement en direction des lames de coupe (42), et les piles (20) sont intégrées dans le boîtier de la poignée (10).

3. Cisaille manuelle à gazon, selon la revendication 2, caractérisée par le fait que la connexion électrique, respectivement assurée entre le moteur électrique (38) et les piles (20) ou les contacts actionnés par le bouton d'enclenchement (22), a lieu par l'intermédiaire de jonctions par conducteurs dans l'articulation tournante.

4. Cisaille manuelle à gazon, selon l'une des revendications 1 à 3, caractérisée par le fait que la poignée (10) et la tête de coupe (12) sont séparées au moyen d'une pièce intercalaire (14) qui est articulée d'une part sur la poignée, par l'intermédiaire d'un tourillon (34) d'articulation tournante, et d'autre part sur la tête de coupe (12), par un tourillon (36) de l'articulation tournante.

5. Cisaille manuelle à gazon, selon la revendication 4, caractérisée par le fait que la pièce intercalaire (14) est réalisée à la manière d'une manivelle et présente, à son extrémité supérieure, un tourillon (34) d'articulation tournante qui est orienté vers l'arrière et s'engage dans un palier logé dans la partie supérieure de la poignée (10), tandis qu'un tourillon inférieur (36) de l'articulation tournante de la pièce intercalaire (14), s'étendant vers l'avant, s'engage dans un palier inférieur de la tête de coupe (12).

6. Cisaille manuelle à gazon, selon les revendications 4 et 5, caractérisée par le fait que la section transversale de la cisaille est de forme trapézoïdale, et la pièce intercalaire (14) présente une configuration trapézoïdale correspondante.

7. Cisaille manuelle à gazon, selon les revendications 4 à 6, caractérisée par le fait que les tourillons (34, 36) de l'articulation tournante prennent axialement appui dans leurs paliers du boîtier, et soumettent les parties dudit boîtier à une précharge mutuelle dans le sens longitudinal.

8. Cisaille manuelle à gazon, selon la revendication 4, caractérisée par le fait que la pièce intercalaire est scindée en deux régions (14a, 14b) reliées l'une à l'autre, avec faculté de pivotement, par l'intermédiaire d'un tourillon (48) d'articulation tournante.

9. Cisaille manuelle à gazon, selon la revendication 8, caractérisée par le fait que l'une (14b) des parties de la pièce intercalaire peut pivoter, à l'intérieur du boîtier de la poignée, autour de l'axe de son tourillon d'articulation (34), la paroi antérieure (30) du boîtier de la poignée présentant, pour le tourillon (48) de l'articulation tournante, une fente en arc de cercle (46) concentrique à l'axe de rotation (34).

10. Cisaille manuelle à gazon, selon la revendication 9, caractérisée par le fait que le tourillon (48) de l'articulation tournante est consigné à demeure dans la partie inférieure de l'autre région (14a) de la pièce intercalaire, et est monté dans une douille de guidage (44) qui est consignée à demeure dans la partie inférieure de la région (14b) de la pièce intercalaire, et est guidée dans la fente (46).

11. Cisaille manuelle à gazon, selon les revendications 8 à 10, caractérisée par le fait que l'extrémité supérieure de la région antérieure (14a) de la pièce intercalaire est guidée à mouvement rotatoire, par un tourillon (36a) d'articulation tournante, dans la partie supérieure de la tête de coupe (12).

12. Cisaille manuelle à gazon, selon l'une des revendications 1 à 11, caractérisée par le fait que des butées, limitant la rotation, sont prévues pour limiter le pivotement relatif autour d'au moins l'un des axes des tourillons (34, 36, 36a, 48) de l'articulation tournante.

13. Cisaille manuelle à gazon, selon l'une des revendications 1 à 12, caractérisée par le fait que des organes encrantables, s'emboîtant élastiquement, limitent différentes positions relatives, prises par pivotement, entre les parties constitutives pouvant pivoter les unes par rapport aux autres.
